# EUROPÄISCHE PATENTSCHRIFT

(11) **EP 3 123 593 B1**
(45) Veröffentlichungstag und Bekanntmachung des Hinweises auf die Patenterteilung: **22.05.2019**
(21) Anmeldenummer: 15715130.9
(22) Anmeldetag: 18.03.2015
(51) Int. Cl.: H02J 9/06, F21S 9/02, H05B 37/02, F21Y 115/10, H02J 9/02, H05B 33/08

(54) **VORRICHTUNGEN, SYSTEME UND VERFAHREN FÜR EINEN NOTLICHTBETRIEB**
DEVICES, SYSTEMS, AND METHODS FOR EMERGENCY LIGHT OPERATION
DISPOSITIF, SYSTÈMES ET PROCÉDÉ POUR UN MODE D'ÉCLAIRAGE DE SECOURS

(30) Priorität: 26.03.2014 AT 1372014 U; 26.03.2014 DE 102014205646
(43) Veröffentlichungstag der Anmeldung: 01.02.2017
(73) Patentinhaber: Tridonic GmbH & Co. KG, 6851 Dornbirn (AT)
(72) Erfinder: SIMMET, Armin, 88379 Amtzell (DE); WILSON, Ian, East Herrington Sunderland SR33RH (GB); KEARS, John, Witton Gilbert Durham Durham DH7 (GB); PARKES, Stephen, Darlington Durham DL1 3TY (GB); MAIER, Simon, 6800 Feldkirch (AT)
(74) Vertreter: Banzer, Hans-Jörg
(86) Internationale Anmeldenummer: PCT/AT2015/050071
(87) Internationale Veröffentlichungsnummer: WO 2015/143466

(56) Entgegenhaltungen:
- WO-A1-2009/103386
- DE-A1- 2 747 173
- US-A- 4 150 302
- US-A1- 2008 024 010
- US-B1- 7 218 056

## Beschreibung

Die Erfindung betrifft einen Notlichtbetrieb von Leuchtmitteln. Die Erfindung betrifft insbesondere Betriebsgeräte, Leuchten, Systeme und Verfahren für einen Notlichtbetrieb, wenn ein Betriebsgerät für ein Leuchtmittel für eine Verbindung mit einem Gleichspannungs(DC)-Bus eingerichtet ist.

Herkömmlich sind Betriebsgeräte für Leuchtdioden (LED) oder andere Leuchtmittel oft derart ausgestaltet, dass sie einen Eingang zur Kopplung mit einer Wechselspannungs(AC)-Versorgungsquelle aufweisen und an ihrem Ausgang einen Gleichstrom oder eine Gleichspannung für das Leuchtmittel bereitstellen. Betriebsgeräte, die eingerichtet ist, um eine DC-Versorgungsspannung zu empfangen, gewinnen in letzter Zeit zunehmend an Attraktivität. Zur Vereinfachung und Kosteneinsparung ist es dabei möglich, eine Zentraleinheit vorzusehen, die eine Gleichspannungs(DC)-Versorgungsspannung erzeugt und an ein Betriebsgerät oder mehrere Betriebsgeräte über einen DC-Bus bereitstellt. Die Betriebsgeräte sind separat von der Zentraleinheit vorgesehen und über den DC-Bus mit der Zentraleinheit verbunden.

In zahlreichen Anwendungen, insbesondere für eine Gebäudebeleuchtung, ist der Einsatz einer Notbeleuchtung erforderlich oder wünschenswert. Die Notbeleuchtung kann als Fluchtwegbeleuchtung ausgestaltet sein, die in einem Notfall, insbesondere bei Ausfall eines Stromversorgungssystem, das Verlassen von Räumen ermöglichen soll. Die Notbeleuchtung kann die Funktion einer Anti-Panik-Beleuchtung erfüllen oder als eine Ersatzbeleuchtung wirken, die in einem Notfall die zeitweilige Fortsetzung von Arbeitsvorgängen erlaubt, um diese noch zu einem sicheren Abschluss zu bringen.

Die US 7 218 056 B1 zeigt eine LED-Notbeleuchtung mit interner Batterie, welche in Form einer konventionellen Glühbirne ausgestaltet ist.

Zur Bereitstellung einer Notbeleuchtung in Leuchtdioden(LED)-basierten Beleuchtungssystemen können spezifische LED-Module bereitgestellt werden, die sich von an den im Normalbetrieb verwendeten LED-Modulen unterscheiden und die im Notlichtfall aktiviert werden können. Dies kann Nachteile im Hinblick auf Kosten und Installationsraumerfordernisse mit sich bringen.

Es besteht ein Bedarf an Vorrichtungen, Systemen und Verfahren, mit denen in effizienter Weise ein Notlichtbetrieb bereitgestellt werden kann. Es besteht insbesondere Bedarf an Vorrichtungen, Systemen und Verfahren, mit denen bei einem Beleuchtungssystem mit einem DC-Bus zur Versorgung von Betriebsgeräten in einfacher Weise ein Notlichtbetrieb bereitgestellt werden kann. Aspekte der Erfindung werden in den unabhängigen Ansprüchen 1, 11 und 13 dargelegt.

Nach Ausführungsbeispielen der Erfindung ist vorgesehen, dass ein Betriebsgerät für wenigstens eine Leuchtdiode eine konfigurierbare Notlichtfunktion aufweist. Die Konfigurierbarkeit kann derart sein, dass festgelegt werden kann, ob das entsprechende Betriebsgerät in einem Notlichtfall weiterhin einen LED-Strom für die ausgangsseitig angeschlossenen LEDs bereitstellen soll oder nicht. Das Betriebsgerät kann so ausgestaltet sein, dass auch in einem Notlichtfall das Betriebsgerät über einen DC-Bus mit einer DC-Versorgungsspannung versorgt wird. Dies erlaubt es, einen zentralen Energiespeicher für mehrere Leuchten zu verwenden, der im Notlichtfall die DC-Versorgungsspannung am DC-Bus bereitstellt. Die Kosten für eine Wartung dezentraler Energiespeicher für einen Notlichtbetrieb können so verringert werden.

Ein Betriebsgerät für wenigstens eine Leuchtdiode nach einem Ausführungsbeispiel ist für eine Kopplung mit einem DC-Bus zum Empfangen einer DC-Versorgungsspannung ausgestaltet. Das Betriebsgerät kann sowohl in einem Normalbetrieb als auch in einem Notlichtfall über den DC-Bus mit Energie versorgt werden. Das Betriebsgerät weist eine konfigurierbare Notlichtfunktion auf. Das Betriebsgerät ist eingerichtet, um in dem Notlichtfall den LED-Strom für die wenigstens eine Leuchtdiode abhängig davon zu erzeugen, wie die Notlichtfunktion konfiguriert ist.

Ein derartiges Betriebsgerät kann in einem Notlichtfall über den DC-Bus von einem zentralen Energiespeicher mit Energie versorgt werden. Die Konfigurierbarkeit erlaubt eine Zuordnung, beispielsweise bei einer Installation des Betriebsgeräts oder der das Betriebsgerät enthaltenden Leuchte, ob das entsprechende Betriebsgerät auch im Notlichtfall für eine Lichtabgabe durch die wenigstens eine Leuchtdiode sorgen soll.

In einem System können an sich baugleiche Betriebsgeräte mit unterschiedlich konfigurierter Notlichtfunktion verwendet werden, um sowohl Leuchten, die nur im Normalbetrieb Licht abgeben, als auch Leuchten, die im Notlichtfall Licht abgeben, zu implementieren. Eine Festlegung der Funktionsweise im Notlichtfall und optional auch im Normalbetrieb kann durch die konfigurierbare Notlichtfunktion erreicht werden.

Durch die Konfigurierbarkeit der Notlichtfunktion kann selektiv nur einem Teil von mehreren Betriebsgeräten die Aufgabe zugewiesen werden, auch im Notlichtfall die zugeordneten Leuchtdioden mit dem LED-Strom zu versorgen. Dadurch kann der Energieverbrauch im Notlichtfall gesenkt werden und auch mit kleineren zentralen Energiespeichern die Notlichtfunktion für die aus Sicherheitsgründen erforderliche Zeitdauer aufrechterhalten werden.

Das Betriebsgerät kann so eingerichtet sein, dass die konfigurierte Notlichtfunktion beibehalten wird. Durch ein Umkonfigurieren kann eine Zuweisung, ob das entsprechende Betriebsgerät auch im Notlichtfall für eine Stromsversorgung der wenigstens einen Leuchtdiode sorgen soll, ermöglicht werden.

Über die konfigurierbare Notlichtfunktion kann festlegbar sein, ob das Betriebsgerät den LED-Strom im Notlichtfall bereitstellt.

Die Notlichtfunktion kann über wenigstens ein Schaltungselement des Betriebsgeräts konfigurierbar sein. Dies ermöglicht eine einfache Festlegung, beispielsweise durch manuelle Manipulation des Schaltungselements, ob das Betriebsgerät den LED-Strom im Notlichtfall erzeugt.

Das wenigstens eine Schaltungselement kann eine Steckbrücke sein, die selektiv gesetzt oder entfernt werden kann, um festzulegen, ob das Betriebsgerät den LED-Strom im Notlichtfall bereitstellt oder nicht.

Das wenigstens eine Schaltungselement kann ein Widerstand sein, der durch eine Benutzeraktion auf wenigstens zwei unterschiedliche Werte eingestellt werden kann, um festzulegen, ob das Betriebsgerät den LED-Strom im Notlichtfall bereitstellt oder nicht.

Das wenigstens eine Schaltungselement kann eine Kapazität sein, die durch eine Benutzeraktion auf wenigstens zwei unterschiedliche Werte eingestellt werden kann, um festzulegen, ob das Betriebsgerät den LED-Strom im Notlichtfall bereitstellt oder nicht.

Das wenigstens eine Schaltungselement kann von einer integrierten Halbleiterschaltung ausgelesen werden, die das Betriebsgerät steuert. Die integrierte Halbleiterschaltung kann ein Mikrocontroller, ein Controller, ein Mikroprozessor, ein Prozessor oder eine anwendungsspezifische Spezialschaltung (ASIC) sein. Beispielsweise kenn die integrierte Halbleiterschaltung bestimmen, ob die Steckbrücke gesetzt ist oder auf welchen Wert der einstellbare Widerstand oder der einstellbare Kondensator eingestellt ist.

Die Notlichtfunktion kann auch durch eine Programmierung über eine Schnittstelle konfiguriert werden.

Das Betriebsgerät kann eine Schnittstelle zum Empfangen eines Befehls aufweisen, mit dem die Notlichtfunktion konfiguriert wird. Als Schnittstelle, über die die Notlichtfunktion konfigurierbar ist, kann der Eingang dienen, mit dem das Betriebsgerät im installierten Zustand mit dem DC-Bus verbunden ist. Als Schnittstelle, über die die Notlichtfunktion konfigurierbar ist, kann eine nur zur Programmierung des Betriebsgeräts vorgesehene Schnittstelle dienen. Als Schnittstelle, über die die Notlichtfunktion konfigurierbar ist, kann eine Sensorschnittstelle verwendet werden, über die das Betriebsgerät im installierten Zustand mit einem Sensor, beispielsweise einem Temperatursensor, verbunden werden kann.

Das Betriebsgerät kann eine integrierte Halbleiterschaltung umfassen, die eingerichtet ist, um den Notlichtfall zu erkennen und um das Betriebsgerät in dem Notlichtfall abhängig davon zu steuern, wie die Notlichtfunktion konfiguriert ist.

Die integrierte Halbleiterschaltung kann mit dem Eingang verbunden sein und kann eingerichtet sein, um den Notlichtfall durch Überwachen einer Spannung an dem Eingang zu erkennen.

Das Betriebsgerät kann einen DC/DC-Wandler mit einem steuerbaren Schalter umfassen. Die integrierte Halbleiterschaltung kann eingerichtet sein, um den steuerbaren Schalter in dem Notlichtfall getaktet zu schalten, um den LED-Strom bereitzustellen, wenn die Notlichtfunktion so konfiguriert ist, dass das Betriebsgerät den LED-Strom im Notlichtfall bereitstellt.

Das Betriebsgerät kann im Notlichtfall einen LED-Strom mit kleinerer Stromstärke erzeugen als im Normalbetrieb. Die integrierte Halbleiterschaltung kann eingerichtet sein, um den steuerbaren Schalter in dem Notlichtfall getaktet so zu schalten, dass der LED-Strom im Vergleich zum Normalbetrieb verringert wird.

Wenn das Betriebsgerät konfiguriert ist, um im Notlichtbetrieb den LED-Strom bereitzustellen, kann die integrierte Halbleiterschaltung das Betriebsgerät so steuern, dass sowohl im Normalbetrieb als auch im Notlichtbetrieb der LED-Strom für die wenigstens eine Leuchtdiode erzeugt wird.

Eine Leuchte nach einem Ausführungsbeispiel umfasst ein Betriebsgerät nach einem Ausführungsbeispiel und wenigstens eine Leuchtdiode, die mit einem Ausgang des Betriebsgeräts verbunden ist.

Die Leuchte kann als Leuchte für eine Gebäudebeleuchtung ausgestaltet sein. Die Leuchte kann eine Wand- oder Deckenleuchte sein.

Ein Beleuchtungssystem nach einem Ausführungsbeispiel umfasst einen DC-Bus, wenigstens ein Betriebsgerät nach einem Ausführungsbeispiel, das mit dem DC-Bus verbunden ist, und eine DC-Spannungsquelle zum Bereitstellen der Versorgungsspannung an dem DC-Bus im Notlichtfall.

Das Beleuchtungssystem kann mehrere Betriebsgeräte nach einem Ausführungsbeispiel umfassen. Die Notlichtfunktionen der mehreren Betriebsgeräte können so konfiguriert sein, dass nur bei einem Teil der mit dem DC-Bus verbundenen Betriebsgeräte festgelegt ist, dass die entsprechenden Betriebsgeräte in dem Notlichtfall den LED-Strom erzeugen. Dadurch kann der Energieverbrauch im Notlichtfall verringert werden, und die Dauer, über die die Notlichtbeleuchtung aufrecht erhalten werden kann, kann verlängert werden..

Die DC-Spannungsquelle für den Notlichtfall kann eine Batterie oder einen Ackumulator umfassen.

Das Beleuchtungssystem kann eine Zentraleinheit umfassen, die eine Versorgungsschaltung zum Bereitstellen der DC-Versorgungsspannung im Normalbetrieb umfasst. Die Versorgungsschaltung kann wenigstens einen AC/DC-Wandler, eine Leistungsfaktorkorrekturschaltung und eine galvanische Trennung umfassen. Der Akkumulator kann mit der Versorgungsschaltung verbunden sein. Im Normalbetrieb kann der Akkumulator aufgeladen werden, falls er nicht vollständig aufgeladen ist. Im Notlichtfall kann der Akkumulator selektiv mit dem DC-Bus verbunden werden, um die DC-Versorgungsspannung an dem DC-Bus bereitzustellen. Ein getakteter DC/DC-Wandler kann zwischen den Akkumulator und den DC-Bus geschaltet sein, um die DC-Versorgungsspannung im Notlichtfall auf einen gewünschten Spannungswert einzustellen.

Der Notlichtfall kann ein Ausfall einer AC-Spannungsquelle, beispielsweise ein Ausfall einer Netzspannung sein.

Bei einem Verfahren für einen Notlichtbetrieb wenigstens einer Leuchtdiode nach einem Ausführungsbeispiel wird ein Betriebsgerät verwendet, das einen Eingang für eine Kopplung mit einem DC-Bus zum Empfangen einer DC-Versorgungsspannung aufweist. Das Betriebsgerät weist eine konfigurierbare Notlichtfunktion auf. Das Verfahren umfasst ein Erkennen eines Notlichtfalls. Das Betriebsgerät stellt selektiv abhängig davon, wie die Notlichtfunktion des Betriebsgeräts konfiguriert ist, einen LED-Strom an die wenigstens eine Leuchtdiode bereit. Das Betriebsgerät wird in dem Notlichtfall über den DC-Bus mit der DC-Versorgungsspannung versorgt.

Das Betriebsgerät kann den Notlichtfall erkennen, indem beispielsweise ein Spannungspegel an dem DC-Bus überwacht wird. Es kann eine Veränderung des Spannungspegels im Notlichtfall gegenüber dem Normalbetrieb erkannt werden. Alternativ oder zusätzlich kann ein über den DC-Bus übertragenes und der DC-Versorgungsspannung aufmoduliertes AC-Signal von dem Betriebsgerät ausgelesen werden, das anzeigt, dass ein Notlichtfall eintritt.

Merkmale des Verfahrens nach weiteren Ausführungsbeispielen und die damit jeweils erzielten Wirkungen entsprechen den unter Bezugnahme auf die Betriebsgeräte, Leuchten und Beleuchtungssystemen beschriebenen Ausgestaltungen.

Das Verfahren kann von dem Betriebsgerät, der Leuchte oder dem Beleuchtungssystem nach einem Ausführungsbeispiel ausgeführt werden.

Vorrichtungen und Verfahren nach Ausführungsbeispielen können insbesondere für Beleuchtungssysteme verwendet werden, bei denen das Leuchtmittel eine Leuchtdiode (LED) oder mehrere LEDs umfasst und das Betriebsgerät über einen DC-Bus mit einer DC-Versorgungsspannung versorgt wird.

Weitere Merkmale, Vorteile und Funktionen von Ausführungsbeispielen der Erfindung werden aus der nachfolgenden detaillierten Beschreibung anhand der beigefügten Zeichnungen ersichtlich, in denen gleiche oder ähnliche Bezugszeichen Einheiten mit gleicher oder ähnlicher Funktion bezeichnen.
Figur 1 zeigt ein Beleuchtungssystem mit einem Betriebsgerät nach einem Ausführungsbeispiel der Erfindung.
Figur 2 zeigt das Beleuchtungssystem von Figur 1, wenn das Betriebsgerät eine anders konfigurierte Notlichtfunktion als in Figur 1 aufweist.
Figur 3 zeigt ein Beleuchtungssystem mit mehreren Leuchten nach einem Ausführungsbeispielen.
Figur 4 illustriert einen Betrieb des Beleuchtungssystems von Figur 3 in einem Notlichtfall.
Figur 5 ist eine schematische Darstellung eines Betriebsgeräts nach einem weiteren Ausführungsbeispiel.
Figur 6 ist eine schematische Darstellung eines Betriebsgeräts nach einem weiteren Ausführungsbeispiel.
Figur 7 ist ein Flussdiagramm eines Verfahrens, das von einem Betriebsgerät nach einem Ausführungsbeispiel ausgeführt wird.
Figur 8 illustriert die Erkennung eines Notlichtfalls durch Überwachung einer Busspannung nach einem Ausführungsbeispiel.
Figur 9 illustriert die Erkennung eines Notlichtfalls durch Überwachung einer Busspannung nach einem weiteren Ausführungsbeispiel.
Figur 10 zeigt eine Zentraleinheit eines Beleuchtungssystems nach einem Ausführungsbeispiel.

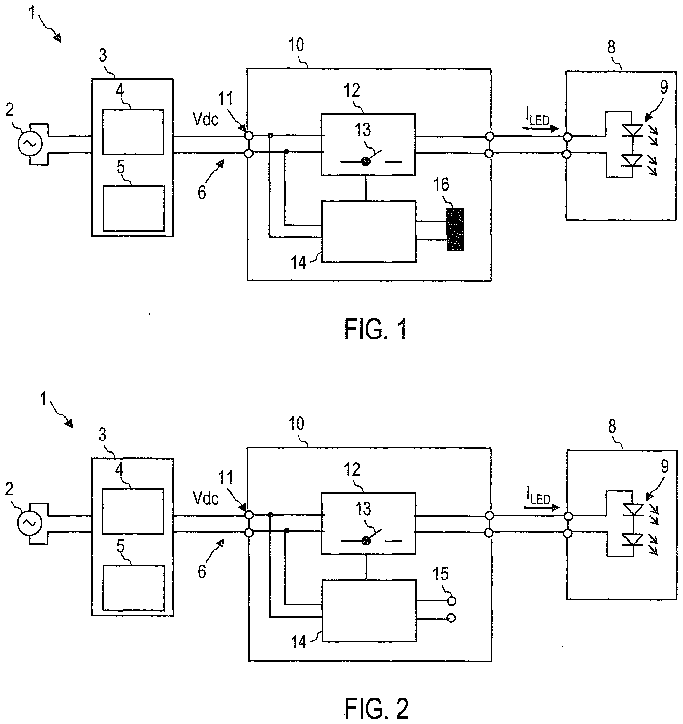

Figur 1 zeigt ein System 1 mit einer Zentraleinheit 3, einem DC-Bus 6, einem Betriebsgerät 6 und einem LED-Modul 8, das mehrere Leuchtdioden (LEDs) 9 umfasst. Die LEDs 9 können anorganische LEDs oder organische LEDs sein. Figur 2 zeigt dasselbe System 1, wenn die Notlichtfunktion anders konfiguriert ist als in Figur 1. Auch wenn in Figur 1 und Figur 2 schematisch jeweils nur ein Betriebsgerät 10 und ein diesem zugeordnetes LED-Modul 8 dargestellt ist, können mehrere Betriebsgeräte mit dem DC-Bus 6 verbunden sein, um einen LED-Strom für ein an ihrem Ausgang angeschlossenes LED-Modul zu erzeugen.

Die Zentraleinheit 3 umfasst eine Versorgungsschaltung 4, die eingerichtet ist, um in einem Normalbetrieb eine AC-Spannung von einer AC-Spannungsquelle 2 zu empfangen und eine DC-Versorgungsspannung für das Betriebsgerät 10 zu erzeugen. Die Versorgungsschaltung 4 kann einen AC/DC-Wandler umfassen. Die Versorgungsschaltung 4 kann eine Potenzialtrennung umfassen, um an dem DC-Bus 6 eine Spannung im SELV ("Separated Extra Low Voltage")-Bereich bereitzustellen und den DC-Bus 6 galvanisch von einer Eingangsseite der Versorgungsschaltung 4 zu trennen.

Das System 1 umfasst einen Energiespeicher 5. Der Energiespeicher 5 kann als Spannungsquelle in einem Notlichtfall dienen. Als Notlichtfall wird insbesondere der Fall betrachtet, in dem die AC-Spannungsquelle 2, beispielsweise die Netzspannung, ausfällt. Der Energiespeicher 5 kann eine Batterie oder ein Akkumulator sein. Der Energiespeicher 5 kann ein Bleiakkumulator sein. Der Energiespeicher 5 kann wieder aufladbar sein. Der Energiespeicher 5 kann eingerichtet sein, um in einem Notlichtfall eine DC-Versorgungsspannung an dem DC-Bus 6 aufrecht zu erhalten, um einige oder alle der mit dem DC-Bus 6 verbundenen Betriebsgeräte mit Energie zu versorgen.

Das Betriebsgerät 10 nach einem Ausführungsbeispiel ist eingerichtet, um einen LED-Strom I_{LED} für das LED-Modul 8 bereitzustellen. Das Betriebsgerät 10 kann einen DC/DC-Wandler 12 umfassen, um den LED-Strom auf einen Sollwert zu regeln oder anderweitig einzustellen. Der DC/DC-Wandler kann ein getakteter Wandler sein, wobei ein steuerbarer Schalter 13 getaktet geschaltet wird, um den LED-Strom für das LED-Modul 8 zu erzeugen.

Das Betriebsgerät 10 kann eine Notlichtfunktion aufweisen, die konfigurierbar ist. Durch die Notlichtfunktion kann von dem Betriebsgerät 10 auch in einem Notlichtfall, beispielsweise bei Ausfall der AC-Spannungsquelle 2, zumindest für eine vorgegebene Zeitdauer der LED-Strom für das LED-Modul 8 erzeugt werden. Die Stromstärke des LED-Stroms kann im Notlichtfall im Vergleich zum Normalbetrieb verringert sein, beispielsweise auf maximal 10 % der maximalen Stromstärke im Normalbetrieb. Durch die Konfigurierbarkeit der Notlichtfunktion kann festgelegt werden, ob das Betriebsgerät 10 im Notlichtfall den LED-Strom an seinem Ausgang bereitstellen soll. Durch die Konfigurierbarkeit kann festgelegt werden, ob das Betriebsgerät 10 für eine Leuchte, die zu einer Notbeleuchtung beiträgt, oder zu einer Leuchte, die im Notlichtfall abgeschaltet wird, eingesetzt wird.

Die konfigurierbare Notlichtfunktion kann auf unterschiedliche Weise realisiert werden. Bei Ausführungsbeispielen, wie sie in Figur 1 und Figur 2 dargestellt sind, ist eine integrierte Halbleiterschaltung 14 eingerichtet, um abhängig von einem Schaltungselement des Betriebsgeräts 10 zu bestimmen, ob das Betriebsgerät 10 im Notlichtfall den LED-Strom erzeugen soll. Das Schaltungselement kann ein manuell manipulierbares Schaltungselement sein. Beispielsweise kann durch Setzen oder Entfernen einer Schaltbrücke 16 festgelegt werden, ob das Betriebsgerät auch im Notlichtfall den LED-Strom erzeugt.

Figur 1 zeigt ein System 1, bei dem eine Steckbrücke 16 vorhanden ist. Die integrierte Halbleiterschaltung 14 kann das Vorhandensein der Steckbrücke 16 erkennen, beispielsweise durch eine Spannungs- oder Widerstandsmessung. Die Steckbrücke kann ein Kurzschlusstecker sein. Figur 2 zeigt das System 1, wenn die Schaltbrücke 16 nicht gesetzt ist und eine Aufnahme 15 für die Schaltbrücke frei bleibt. Die integrierte Halbleiterschaltung 14 kann das Fehlen der Schaltbrücke 16 erkennen, beispielsweise durch eine Spannungs- oder Widerstandsmessung.

Durch Einsetzen oder Entfernen der Steckbrücke 16 kann die Notlichtfunktion des Betriebsgeräts 10 so konfiguriert werden, dass in dem Notlichtfall ein LED-Strom erzeugt wird. Beispielsweise kann die integrierte Halbleiterschaltung 14 dann, wenn die Steckbrücke 16 eingesetzt ist, erkennen, dass das Betriebsgerät 10 auch im Notlichtfall den LED-Strom erzeugen soll. Die integrierte Halbleiterschaltung kann dann, wenn die Steckbrücke 16 nicht eingesetzt ist, erkennen, dass das Betriebsgerät 10 im Notlichtfall keinen LED-Strom erzeugen und abgeschaltet werden soll. Es kann auch eine umgekehrte Kodierung eingesetzt werden, bei der das Vorhandensein der Steckbrücke 16, die zwei Leiterbahnen verbindet, anzeigt, dass das Betriebsgerät 10 im Notlichtfall keinen LED-Strom erzeugen und abgeschaltet werden soll. Bei dieser Kodierung würde das Fehlen der Steckbrücke 15 anzeigen, dass das Betriebsgerät 10 im Notlichtfall einen LED-Strom erzeugen soll.

Zahlreiche andere Ausgestaltungen der Betriebsschaltung 10 können verwendet werden, um eine Festlegung zu ermöglichen, ob die Betriebsschaltung 10 im Notlichtfall einen LED-Strom erzeugen soll. Beispielsweise kann die Betriebsschaltung 10 einen Widerstand umfassen, der auf wenigstens zwei Werte eingestellt werden kann. Der Widerstand kann benutzerdefiniert eingestellt werden, beispielsweise durch Betätigen eines DIP-Schalters. Die integrierte Halbleiterschaltung 10 kann den eingestellten Widerstand auslesen und ermitteln, ob der eingestellte Widerstandswert eine Konfiguration der Notlichtfunktion angibt, bei der das Betriebsgerät 10 im Notlichtfall einen LED-Strom erzeugen soll. Alternativ oder zusätzlich kann eine einstellbare Kapazität oder ein anderes manuell manipulierbares Schaltungselement vorgesehen werden, dessen wenigstens zwei Zustände kodieren, ob as Betriebsgerät 10 im Notlichtfall einen LED-Strom erzeugen soll oder nicht.

Das Betriebsgerät 10 ist so ausgestaltet, dass die Konfiguration der Notlichtfunktion persistent ist und beibehalten wird, wenn sich Normalbetrieb und Notlichtfall einmal oder mehrfach abwechseln. Allerdings kann das Betriebsgerät 10 ein Umkonfigurieren der Notlichtfunktion erlauben, beispielsweise indem die Steckbrücke 15 wieder entfernt oder neu eingefügt wird, ein DIP-Schalter betätigt, ein Widerstandswert eines Widerstands oder eine Kapazität eines Kondensators benutzerdefiniert verändert wird, oder ein Schalter des Betriebsgeräts 10 manuell betätigt wird.

Falls ein Notlichtfall eintritt kann die integrierte Halbleiterschaltung 14 das Betriebsgerät 10 so steuern, dass selektiv nur dann ein LED-Strom im Notlichtfall erzeugt wird, wenn die Notlichtfunktion des Betriebsgeräts 10 so konfiguriert ist, dass das Betriebsgerät 10 im Notlichtfall weiterhin einen LED-Strom ausgeben soll. Wenn die Notlichtfunktion des Betriebsgeräts 10 so konfiguriert ist, dass das Betriebsgerät 10 im Notlichtfall weiterhin einen LED-Strom ausgeben soll, kann die integrierte Halbleiterschaltung 14 das Betriebsgerät 10 so steuern, dass auch im Normalbetrieb ein LED-Strom bereitgestellt wird. Ein Betriebsgerät 10, das im Notlichtfall den LED-Strom für das LED-Modul 8 bereitstellt, kann auch im Normalbetrieb einen LED-Strom erzeugen.

Die Arbeitsweise des Betriebsgeräts 10 und insbesondere des DC/DC-Wandlers 12 kann im Normalbetrieb und im Notlichtfall unterschiedlich sein. Insbesondere kann die integrierte Halbleiterschaltung 14 den steuerbaren Schalter 13 des DC/DC-Wandlers 12 so schalten, dass im Notlichtbetrieb der LED-Strom eine kleinere Stromstärke aufweist als im Normalbetrieb. Falls das Betriebsgerät 10 eingerichtet ist, um ein Dimmen zu ermöglichen, kann die integrierte Halbleiterschaltung 14 den steuerbaren Schalter 13 des DC/DC-Wandlers 12 so schalten, dass im Notlichtbetrieb der LED-Strom eine kleinere Stromstärke aufweist als die Stromstärke bei 100 % Dimmlevel, d.h. die maximale Stromstärke, im Normalbetrieb.

Das Betriebsgerät 10 kann auch eingerichtet sein, um im Normalbetrieb und Notlichtfall mit unterschiedlichen DC-Eingangsspannungen zu arbeiten. Beispielweise kann die DC-Versorgungsspannung am DC-Bus 3 im Normalbetrieb größer oder alternativ kleiner sein als im Notlichtfall.

Die integrierte Halbleiterschaltung 14 kann das getaktete Schalten des steuerbaren Schalters 13 abhängig davon, ob das Betriebsgerät 10 gerade im Normalbetrieb oder im Notlichtbetrieb arbeitet, so verändern, dass die zwischen den Betriebsarten existierenden Unterschiede in der Stromstärke des LED-Stroms und/oder in den Eingangsspannungen berücksichtigt werden.

Das Betriebsgerät 10 kann weitere Funktionen erfüllen. Wenn das Betriebsgerät 10 für ein Dimmen eingerichtet ist, kann die integrierte Halbleiterschaltung 14 beispielsweise einen Dimmbefehl auslesen und eine Stromregelung an den durch den Dimmbefehl neu eingestellten Dimmlevel anpassen. Der Dimmbefehl kann über den DC-Bus 6 als sogenannte PLC ("Power Line Communication") übertragen werden. Das Betriebsgerät 10 kann einen PLC-Demodulator zum Demodulieren von auf die DC-Versorgungsspannung aufmodulierten AC-Signalen aufweisen, mit denen Dimmbefehle kodiert werden. Das Betriebsgerät 10 kann auch für eine Übertragung von Informationen über den DC-Bus 6 eingerichtet sein. Die Informationen können beispielsweise diagnoserelevante Informationen sein, z.B. Informationen über irreguläre Betriebszustände wie Fehlerabschaltungen. Die Informationen können über den DC-Bus 6 übertragen werden. Das Betriebsgerät 10 kann einen PLC-Modulator zum Aufmodulieren von AC-Signalen auf den DC-Bus 6 umfassen, um die Informationen zu übertragen.

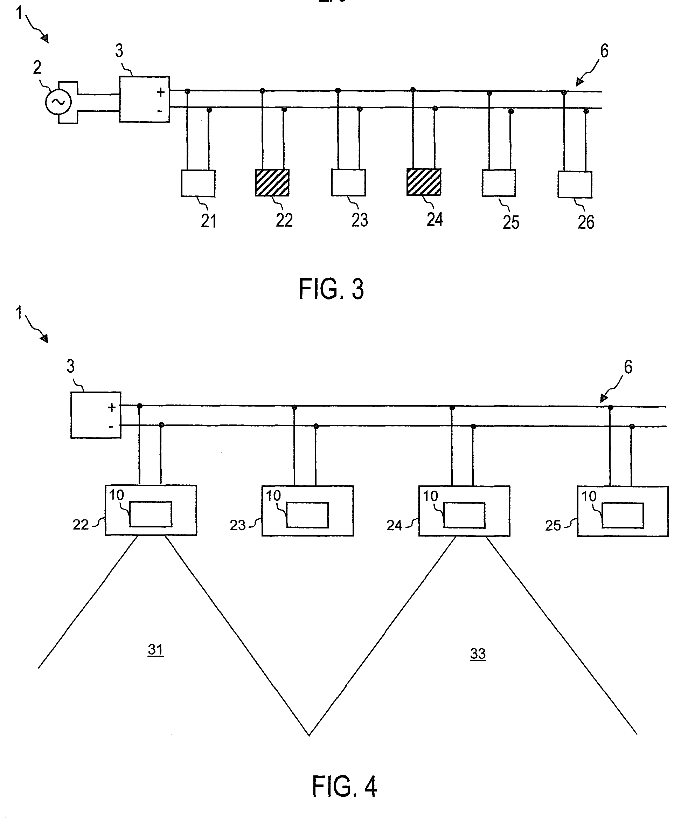

Figur 3 zeigt ein System 1 mit mehreren Leuchten 21-26, die jeweils mit dem DC-Bus 6 verbunden sind. Jede der Leuchten 21-26 weist ein Betriebsgerät 10 nach einem Ausführungsbeispiel und wenigstens eine Leuchtdiode auf. Bei den Betriebsgeräten 10 von einer oder mehrere der Leuchten 22, 24 ist die Notlichtfunktion derart konfiguriert, dass die entsprechende Leuchte 22, 24 im Notlichtfall Licht abgibt, da das Betriebsgerät 10 die LEDs mit dem LED-Strom versorgt. Bei den Betriebsgeräten 10 von einer oder mehrere weiteren Leuchten 21, 23, 25, 26 ist die Notlichtfunktion derart konfiguriert, dass die entsprechende Leuchte 22, 24 im Notlichtfall kein Licht abgibt, da das Betriebsgerät 10 die LEDs nicht mit dem LED-Strom versorgt.

Figur 4 zeigt eine schematische Seitenansicht des Systems 1 im Notlichtfall. Die Leuchten 21-26 können Wand- oder Deckenleuchten für eine Gebäudebeleuchtung sein. Die Leuchten 21-26 können in einem Gebäude installiert sein.

Aufgrund der Konfiguration der Notlichtfunktion der Betriebsgeräte 10 der Leuchten 22, 24 stellen diese Betriebsgeräte 10 den LED-Strom für die LEDs im Notlichtfall bereit, so dass die LEDs Licht 31, 33 abgeben.

Aufgrund der der Konfiguration der Notlichtfunktion der Betriebsgeräte 10 der weiteren Leuchten 23, 25 stellen diese Betriebsgeräte 10 im Notlichtfall keinen LED-Strom für die LEDs bereit, so dass die LEDs der weiteren Leuchten 23, 25 im Notlichtfall kein Licht abgeben.

Durch das Konfigurieren der Notlichtfunktionen der Betriebsgeräte kann ein Lichtmuster einer Notbeleuchtung festgelegt werden. Es ist möglich, aber nicht unbedingt erforderlich, die unterschiedlichen Betriebsgeräte 21-24 bei einem Notlichtfall durch an die verschiedenen Betriebsgeräte adressierte Steuerbefehle so zu steuern, dass das entsprechende Lichtmuster erzeugt wird. Aufgrund der konfigurierbaren Notlichtfunktion kann beispielsweise eine Veränderung des Spannungspegels oder ein an alle Betriebsgeräte gleichzeitig über den DC-Bus 6 übertragenes Signal anzeigen, dass der Notlichtfall eintritt. Als Antwort darauf verringern die Betriebsgeräte 10 der Leuchten 22, 24 den LED-Strom für einen Notlichtbetrieb, während die Betriebsgeräte 10 eines weiteren Teils der Leuchten 23, 25 gar keinen LED-Strom mehr erzeugen und abgeschaltet werden oder in einen Standby-Modus übergehen.

Zahlreiche weitere Abwandlungen von Betriebsgeräten, Leuchten und Systemen nach Ausführungsbeispielen können realisiert werden. Beispielsweise kann die Notlichtfunktion eines Betriebsgeräts auch über eine Schnittstelle programmiert werden.

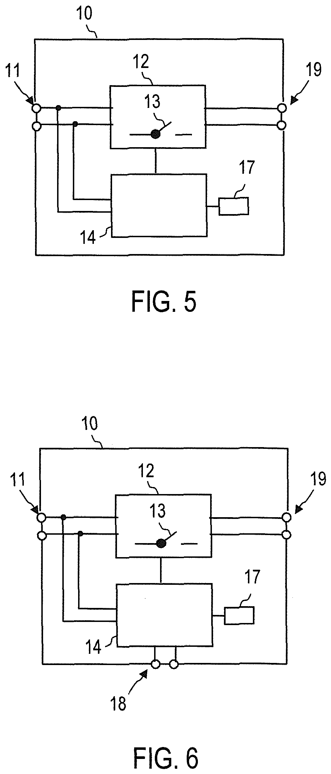

Figur 5 zeigt ein Betriebsgerät 10 nach einem weiteren Ausführungsbeispiel. Das Betriebsgerät 10 ist so eingerichtet, dass die Notlichtfunktion über eine Programmierung an dem Eingang 11 konfiguriert werden kann, der im installierten Zustand des Betriebsgeräts 10 mit dem DC-Bus 6 verbunden ist. Die integrierte Halbleiterschaltung 14 kann an dem Eingang 11 empfangene Signale überwachen, mit denen die Notlichtfunktion konfiguriert werden kann. Beispielsweise kann ein AC-Spannungssignal am Eingang 10 mit einer ersten Frequenz anzeigen, dass die Notlichtfunktion des Betriebsgeräts 10 so konfiguriert werden soll, dass das Betriebsgerät 10 im Notlichtfall einen LED-Strom erzeugt. Ein AC-Spannungssignal am Eingang 10 mit einer zweiten Frequenz kann anzeigen, dass die Notlichtfunktion des Betriebsgeräts 10 so konfiguriert werden soll, dass das Betriebsgerät 10 im Notlichtfall keinen LED-Strom erzeugt. Andere Programmierungen sind möglich. Beispielweise kann über an dem Eingang 10 empfangene Spannungssignale eine erste Binärfolge zu der integrierten Halbleiterschaltung übertragen werden, die anzeigt, dass die Notlichtfunktion des Betriebsgeräts 10 so konfiguriert werden soll, dass das Betriebsgerät 10 im Notlichtfall einen LED-Strom erzeugt. Über an dem Eingang 10 empfangene Spannungssignale kann eine zweite Binärfolge zu der integrierten Halbleiterschaltung übertragen werden, die anzeigt, dass die Notlichtfunktion des Betriebsgeräts 10 so konfiguriert werden soll, dass das Betriebsgerät 10 im Notlichtfall keinen LED-Strom erzeugt.

Das Betriebsgerät 10 kann einen Speicher 17 aufweisen, in dem gespeichert wird, ob die Notlichtfunktion so konfiguriert ist, dass das Betriebsgerät 10 im Notlichtfall einen LED-Strom erzeugt oder nicht. Der Speicher 17 kann ein nichtflüchtiger Speicher sein.

Es kann auch eine andere Schnittstelle als der Eingang 11 verwendet werden, um das Betriebsgerät 10 zu programmieren.

Figur 6 zeigt ein Betriebsgerät 10 nach einem weiteren Ausführungsbeispiel. Das Betriebsgerät 10 ist so eingerichtet, dass die Notlichtfunktion über eine Programmierung an einer Schnittstelle 18 konfiguriert werden kann. Die Schnittstelle 18 ist von dem Eingang 11 verschieden, der im installierten Zustand mit dem DC-Bus 6 verbunden wird. Die Schnittstelle 18 kann eine Programmierschnittstelle für das Betriebsgerät sein, die im installierten Zustand des Betriebsgeräts 10 nicht verwendet wird. Die Schnittstelle 18 kann auch eine Sensorschnittstelle sein, an die im installierten Zustand des Betriebsgeräts 10 ein Sensor anschließbar ist und die zum Konfigurieren des Notlichtfunktion vorübergehend verwendet wird, um das Betriebsgerät 10 zu programmieren. Die Programmierung kann wie unter Bezugnahme auf Figur 5 beschrieben erfolgen.

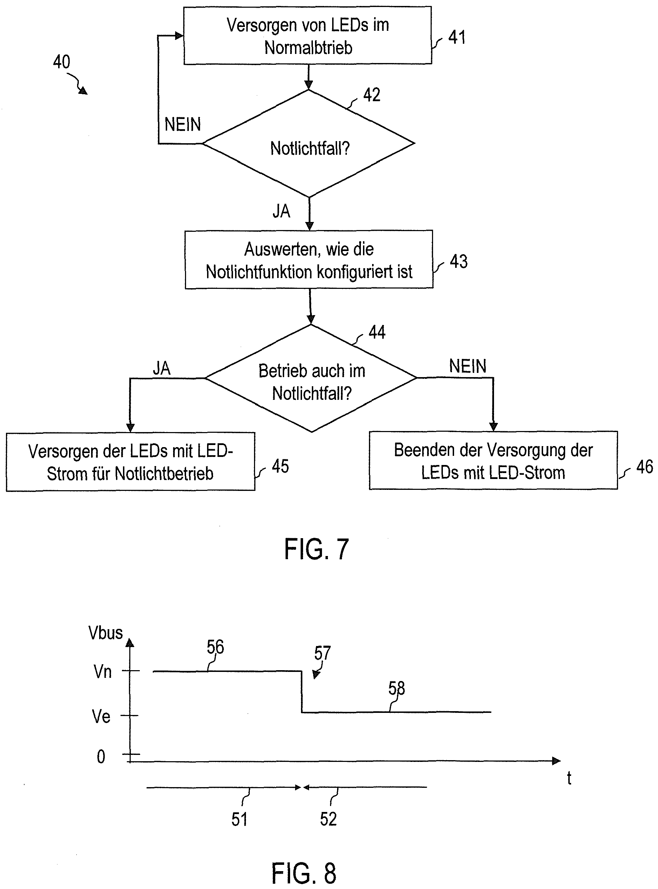

Figur 7 ist ein Flussdiagramm eines Verfahrens 40, das von einem Betriebsgerät 10 nach einem Ausführungsbeispiel ausgeführt wird.

Bei Schritt 41 kann das Betriebsgerät 10 LEDs im Normalbetrieb mit einem LED-Strom versorgen. Bei Schritt 42 kann das Betriebsgerät 10 ermitteln, ob ein Notlichtfall vorliegt. Die Erkennung eines Notlichtfalls kann beispielsweise durch Überwachung der Spannung an dem mit dem DC-Bus 6 gekoppelten Eingang 11 erfolgen. Falls kein Notlichtfall vorliegt, kann die Versorgung der LEDs im Normalbetrieb bei Schritt 41 fortgesetzt werden.

Falls ein Notlichtfall erkannt wird, kann das Betriebsgerät 10 bei Schritt 43 ermitteln, wie die Notlichtfunktion des Betriebsgeräts 10 konfiguriert ist. Dazu kann die integrierte Hableiterschaltung 14 den Zustand eines Schaltungselements, beispielsweise der Schaltbrücke 15, abfragen und/oder einen Indikator für die eingestellte Konfiguration aus einem nicht-flüchtigen Speicher 17 auslesen.

Bei Schritt 44 wird überprüft, ob gemäß der Konfiguration der Notlichtfunktion der LED-Strom auch im Notlichtfall bereitgestellt werden soll. Falls die Notlichtfunktion so konfiguriert ist, dass der LED-Strom auch im Notlichtfall bereitgestellt werden soll, werden bei Schritt 45 die LEDs mit einem LED-Strom für den Notlichtbetrieb versorgt. Eine Stromstärke des LED-Stroms kann im Vergleich zu dem Normalbetrieb reduziert werden.

Falls bei Schritt 44 ermittelt wird, dass die Notlichtfunktion so konfiguriert ist, dass der LED-Strom im Notlichtfall nicht mehr bereitgestellt werden soll, wird bei Schritt 46 die Erzeugung des LED-Stroms beendet. Das Betriebsgerät kann in einen Standby-Modus übergehen oder abgeschaltet werden.

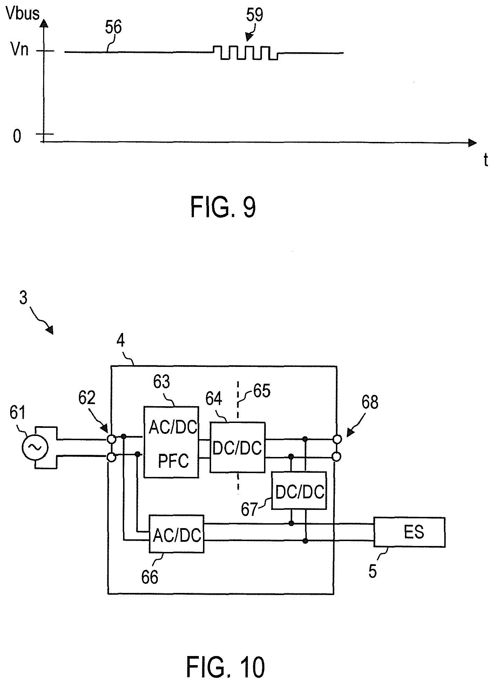

Das Betriebsgerät 10 kann auf unterschiedliche Weise den Notlichtfall erkennen, wie anhand von Figur 8 und Figur 9 beschrieben wird.

Figur 8 zeigt eine Spannung am DC-Bus 6 eines Systems nach einem Ausführungsbeispiel, wenn ein Notlichtfall eintritt. In einem Zeitintervall 41, in dem das System im Normalbetrieb arbeitet, weist die DC-Versorgungsspannung einen Spannungspegel 56 auf. Im Notlichtfall kann die DC-Versorgungsspannung am DC-Bus 6 auf einen weiteren Spannungspegel 58 sinken, der kleiner als der Spannungspegel 56 ist. Die integrierte Hableitschaltung 14 des Betriebsgeräts 14 kann die fallende Spannungsflanke 57 erkennen und dadurch bestimmen, dass der Notlichtfall vorliegt. In einem Zeitintervall 52 arbeitet das System im Notlichtbetrieb. Das Ende des Notlichtbetriebs kann durch eine steigende Spannungsflanke am DC-Bus 6 erkannt werden.

Die unterschiedlichen Spannungspegel 56, 58 am DC-Bus 6 im Normalbetrieb und im Notlichtbetrieb können beispielsweise dadurch resultieren, dass eine Ausgangsspannung des Energiespeichers 5 kleiner als der Spannungspegel der im Normalbetrieb von der Zentraleinheit 3 erzeugten DC-Versorgungsspannung ist. Beispielweise kann im Normalbetrieb eine DC-Versorgungsspannung von bis zu 60 Volt, z.B. eine Spannung von 48 Volt, an dem DC-Bus 6 anliegen. Im Notlichtbetrieb kann die DC-Versorgungsspannung beispielsweise auf 24 Volt oder 12 Volt gesenkt werden.

Die unterschiedlichen Spannungspegel 56, 58 können von der Zentraleinheit 3 eingestellt werden, um den Beginn und das Ende des Notlichtbetriebs anzuzeigen.

In einem weiteren Ausführungsbeispiel kann die DC-Versorgungsspannung am DC-Bus 6 im Notlichtfall auf einen weiteren Spannungspegel erhöht werden, der größer als der Spannungspegel 56 ist. Die integrierte Hableitschaltung 14 des Betriebsgeräts 14 kann die steigende Spannungsflanke 57 oder auch die Erhöhung des Spannungspegels erkennen und dadurch bestimmen, dass der Notlichtfall vorliegt. Das Ende des Notlichtbetriebs kann durch eine sinkende Spannungsflanke oder auch die Absenkung des Spannungspegels am DC-Bus 6 erkannt werden.

Die unterschiedlichen Spannungspegel am DC-Bus 6 im Normalbetrieb und im Notlichtbetrieb können beispielsweise dadurch resultieren, dass eine Ausgangsspannung des Energiespeichers 5 größer als der Spannungspegel der im Normalbetrieb von der Zentraleinheit 3 erzeugten DC-Versorgungsspannung ist. Beispielweise kann im Normalbetrieb eine DC-Versorgungsspannung von beispielsweise 24 Volt oder 48 Volt an dem DC-Bus 6 anliegen. Im Notlichtbetrieb kann die DC-Versorgungsspannung beispielsweise auf 48 Volt oder 55 Volt erhöht werden.

Die unterschiedlichen Spannungspegel können von der Zentraleinheit 3 eingestellt werden, um den Beginn und das Ende des Notlichtbetriebs anzuzeigen.

Figur 9 zeigt eine Spannung am DC-Bus 6 eines Systems nach einem Ausführungsbeispiel, wenn ein Notlichtfall eintritt. Die Zentraleinheit 3 kann ein AC-Signal 56 auf die DC-Versorgungsspannung 56 aufmodulieren, um anzuzeigen, dass der Notlichtfall eintritt. Die integrierte Hableitschaltung 14 des Betriebsgeräts 14 kann das AC-Signal 59 erkennen und dadurch bestimmen, dass der Notlichtfall vorliegt. Abhängig davon, wie die Notlichtfunktion im entsprechenden Betriebsgerät 10 konfiguriert ist, kann die Erzeugung des LED-Stroms beendet werden oder der LED-Strom kann weiter mit geringerer Stromstärke erzeugt werden, um die LEDs zu versorgen. Das Ende des Notlichtbetriebs kann durch ein weiteres AC-Signal an dem DC-Bus 6 angezeigt werden.

Figur 10 ist eine Darstellung der Zentraleinheit 3 nach einem Ausführungsbeispiel. Die Zentraleinheit 3 umfasst eine Versorgungsschaltung 4 mit einem Eingang 62, der mit einer Wechselspannungsquelle 61, beispielsweise der Netzspannung gekoppelt ist. Die Versorgungsschaltung 4 kann auch eingerichtet sein, um mit einem photovoltaischen Element gekoppelt zu werden.

Die Versorgungsschaltung 4 ist eingerichtet, um eine DC-Versorgungsspannung zu erzeugen und um das Betriebsgerät 10 über den DC-Bus 6 mit Energie zu versorgen. Die Versorgungsschaltung 4 kann einen Gleichrichter und eine Leistungsfaktorkorrekturschaltung 63 umfassen. Die Versorgungsschaltung 4 kann einen DC/DC-Wandler mit Potenzialtrennung aufweisen, um eine Potenzialbarriere 65 bereitzustellen. Die Potenzialbarriere 65 kann eine SELV-Barriere sein.

Ein Energiespeicher 5, der ein wieder aufladbarer Energiespeicher sein kann, kann mit der Versorgungsschaltung 4 verbunden oder in diese integriert sein. Es ist auch möglich, den Energiespeicher separat von der Versorgungsschaltung 4 vorzusehen.

Die Versorgungsschaltung 4 kann eingerichtet sein, um den Energiespeicher 5 zu laden oder um ein Entladen des Energiespeichers über den DC-Bus 6 im Notlichtfall zu ermöglichen. Die Versorgungsschaltung 4 kann einen AC/DC-Wandler 66 umfassen, um einen Gleichstrom zum Laden des Energiespeichers 5 zu erzeugen. Die Versorgungsschaltung 4 kann einen DC/DC-Wandler 67 umfassen, der im Notlichtfall betrieben wird, um eine DC-Versorgungsspannung an dem DC-Bus bereitzustellen. Wie in Figur 10 dargestellt, kann die Versorgungsschaltung 4 sowohl im Normalbetrieb als auch im Notlichtfall eine DC-Versorgungsspannung an einem Ausgang 68 bereitstellen. Die DC-Versorgungsspannung kann im Normalbetrieb und im Notlichtbetrieb unterschiedliche Spannungspegel aufweisen.

Während Ausführungsbeispiele unter Bezugnahme auf die Figuren beschrieben wurden, können Abwandlungen bei weiteren Ausführungsbeispielen verwendet werden. Beispielsweise kann eine Notlichtfunktion des Betriebsgeräts auch mehr als zwei mögliche Zustände definieren. Dies würde es erlauben, zusätzlich oder alternativ zu einer ersten Konfiguration, bei der das Betriebsgerät nur im Normalbetrieb den LED-Strom erzeugt, und einer zweiten Konfiguration, bei der das Betriebsgerät sowohl im Normalbetrieb als auch im Notlichtfall den LED-Strom erzeugt, weitere Konfigurationen zu definieren. Beispielsweise kann eine dritte Konfiguration festgelegt werden, bei der das Betriebsgerät nur im Notlichtfall den LED-Strom erzeugt.

Zusätzlich oder alternativ zu einer Programmierung der Betriebsgeräte über eine Schnittstelle bei der Installation der Betriebsgeräte kann die Notlichtfunktion auch im eingebauten Zustand der Betriebsgeräte konfiguriert werden. Die Notlichtfunktion kann über den DC-Bus in PLC erfolgen, wobei die entsprechenden Steuersignale Adressinformation für ein Betriebsgerät enthalten.

Vorrichtungen und Verfahren nach Ausführungsbeispielen können insbesondere für den Betrieb von Leuchtmitteln, die LEDs umfassen, eingesetzt werden.

## Patentansprüche

1. Beleuchtungssystem (1), umfassend:
einen DC-Bus (6),
wenigstens ein Betriebsgerät (10) für wenigstens eine Leuchtdiode (9),
wobei das wenigstens eine Betriebsgerät (10) einen Eingang (11) für eine Kopplung mit dem DC-Bus (6) zum Empfangen einer DC-Versorgungsspannung aufweist, über den das wenigstens eine Betriebsgerät (10) sowohl in einem Normalbetrieb bei Verfügbarkeit einer AC-Spannungsquelle des Beleuchtungssystems (1) als auch in einem Notlichtfall bei Ausfall der AC-Spannungsquelle über den DC-Bus (6) mit Energie versorgbar ist,
wobei das wenigstens eine Betriebsgerät (10) mit dem DC-Bus (6) verbunden ist,
wobei das wenigstens eine Betriebsgerät (10) eine konfigurierbare Notlichtfunktion aufweist, und
wobei das wenigstens eine Betriebsgerät (10) eingerichtet ist, um in dem Notlichtfall den LED-Strom für die wenigstens eine Leuchtdiode (9) abhängig davon zu erzeugen, wie die Notlichtfunktion konfiguriert ist,
eine DC-Spannungsquelle (5) zum Bereitstellen der Versorgungsspannung an dem DC-Bus (6) in dem Notlichtfall, und
eine Zentraleinheit (3), die eine Versorgungsschaltung (4) mit einem AC/DC-Wandler zum Bereitstellen der DC-Versorgungsspannung an dem DC-Bus (6) in dem Normalbetrieb umfasst.

2. Beleuchtungssystem (1) nach Anspruch 1,
wobei über die konfigurierbare Notlichtfunktion festlegbar ist, ob das wenigstens eine Betriebsgerät (10) im Notlichtfall den LED-Strom erzeugt.

3. Beleuchtungssystem (1) nach Anspruch 1 oder Anspruch 2,
wobei die Notlichtfunktion über wenigstens ein Schaltungselement (15) des wenigstens einen Betriebsgeräts (10) konfigurierbar ist.

4. Beleuchtungssystem (1) nach Anspruch 3,
wobei das wenigstens eine Schaltungselement ausgewählt ist aus einer Gruppe bestehend aus einer Steckbrücke (16), einem einstellbaren Widerstand und einer einstellbaren Kapazität.

5. Beleuchtungssystem (1) nach einem der vorhergehenden Ansprüche,
wobei das wenigstens eine Betriebsgerät (10) eine Schnittstelle (11; 18) zum Empfangen eines Befehls zum Konfigurieren der Notlichtfunktion aufweist.

6. Beleuchtungssystem (1) nach einem der vorhergehenden Ansprüche, wobei
das wenigstens eine Betriebsgerät (10) eine integrierte Halbleiterschaltung (14) umfasst, die eingerichtet ist, um den Notlichtfall zu erkennen und um das wenigstens eine Betriebsgerät (10) in dem Notlichtfall abhängig davon zu steuern, wie die Notlichtfunktion konfiguriert ist.

7. Beleuchtungssystem (1) nach Anspruch 6,
wobei die integrierte Halbleiterschaltung (14) mit dem Eingang verbunden ist und eingerichtet ist, um den Notlichtfall durch Überwachung einer Spannung an dem Eingang (11) zu erkennen.

8. Beleuchtungssystem (1) nach einem der Ansprüche 6 bis 7, wobei das wenigstens eine Betriebsgerät (10) einen Wandler (12) mit einem steuerbaren Schalter (13) umfasst,
wobei die integrierte Halbleiterschaltung (14) eingerichtet ist, um den steuerbaren Schalter (13) in dem Notlichtfall getaktet zu schalten, um den LED-Strom zu erzeugen, wenn die Notlichtfunktion so konfiguriert ist, dass das wenigstens eine Betriebsgerät (10) den LED-Strom im Notlichtfall bereitstellt.

9. Beleuchtungssystem (1) nach einem der vorhergehenden Ansprüche,
wobei das Beleuchtungssystem mehrere Betriebsgeräte (10) umfasst, und
wobei nur bei einem Teil der mit dem DC-Bus verbundenen Betriebsgeräte (22, 24) eine Notlichtfunktion so konfiguriert ist, dass die entsprechenden Betriebsgeräte (22, 24) in dem Notlichtfall den LED-Strom erzeugen.

10. Beleuchtungssystem (1) nach einem der vorhergehenden Ansprüche,
wobei die DC-Spannungsquelle eine Batterie oder einen Akkumulator (5) umfasst.

11. Leuchte, umfassend
ein Betriebsgerät (10) eines Beleuchtungssystems (1) nach einem der vorhergehenden Ansprüche, und
wenigstens eine Leuchtdiode (9), die mit einem Ausgang des Betriebsgeräts (10) verbunden ist.

12. Verfahren für einen Notlichtbetrieb in einem Beleuchtungssystem (1) mit
einem DC-Bus (6),
wenigstens einem Betriebsgerät (10), das einen Eingang (11) für eine Kopplung mit einem DC-Bus (6) zum Empfangen einer DC-Versorgungsspannung aufweist, wobei das wenigstens eine Betriebsgerät (10) mit dem DC-Bus (6) verbunden ist und wobei das wenigstens eine Betriebsgerät (10) eine konfigurierbare Notlichtfunktion aufweist,
einer DC-Spannungsquelle (5) zum Bereitstellen der Versorgungsspannung an dem DC-Bus (6) in einem Notlichtfall bei Ausfall einer AC-Spannungsquelle des Beleuchtungssystems, und
einer Zentraleinheit (3), die eine Versorgungsschaltung (4) mit einem AC/DC-Wandler zum Bereitstellen der DC-Versorgungsspannung an dem DC-Bus (6) in einem Normalbetrieb bei Verfügbarkeit der AC-Spannungsquelle umfasst,
wobei das Verfahren umfasst:
Erkennen des Notlichtfalls durch das wenigstens eine Betriebsgerät (10), und
Bereitstellen eines LED-Stroms durch das wenigstens eine Betriebsgerät (10) an wenigstens eine Leuchtdiode (9) in dem Notlichtfall abhängig davon, wie die Notlichtfunktion des wenigstens einen Betriebsgeräts (10) konfiguriert ist, wobei das wenigstens eine Betriebsgerät (10) in dem Notlichtfall über den DC-Bus (6) mit der DC-Versorgungsspannung versorgt wird.

13. Verfahren nach Anspruch 12,
wobei das Verfahren mit dem Beleuchtungssystem (1) nach einem der Ansprüche 1 bis 10 ausgeführt wird.

## Claims

1. Lighting system (1) comprising: a DC bus (6), and at least one operating device (10) for at least one light emitting diode (9),
wherein the at least one operating device (10) has an input (11) for coupling to the DC bus (6) to receive a DC supply voltage, wherein the at least one operating device (10), both during normal operation with the availability of an AC voltage source for the Illumination system (1), as well as in the event of an emergency malfunction of the AC voltage source, may be supplied with energy via the DC bus (6),
wherein the at least one operating device (10) is connected to the DC bus (6),
wherein the at least one operating device (10) has a configurable emergency lighting function, and
wherein, in the event of an emergency malfunction, the at least one operating device (10) is arranged to generate the LED current for the at least one light emitting diode (9) as a function of how the emergency lighting function is configured,
a DC voltage source (5) for providing the supply voltage to the DC bus (6) in the event of an emergency, and
a central processing unit (3) comprising a supply circuit (4) with an AC/DC converter for providing the DC supply voltage to the DC bus (6) during the normal mode.

2. Lighting system (1) according to claim 1, wherein it may be determined whether the at least one operating device (10) is generating the LED current in the event of an emergency via the configurable emergency lighting function.

3. Lighting system (1) according to claim 1 or claim 2, wherein the emergency lighting function may be configured via at least one circuit element (15) of the at least one operating device (10).

4. Lighting system (1) according to claim 3, wherein the at least one circuit element is selected from a group consisting of a jumper (16), an adjustable resistor, and an adjustable capacitance.

5. Lighting system (1) according to any one of the preceding claims, wherein the at least one operating device (10) has an interface (11; 18) for receiving a command to configure the emergency lighting function.

6. Lighting system (1) according to any one of the preceding claims, wherein the at least one operating device (10) comprises a semiconductor integrated circuit (14) that is designed to detect the emergency lighting, and to control how the at least one operating device (10) configures the emergency lighting function.

7. Lighting system (1) according to claim 6, wherein the semiconductor integrated circuit (14) is connected to the input, and is designed to detect the emergency lighting by monitoring a voltage at the input (11).

8. Lighting system (1) according to any one of the claims 6 to 7, wherein the at least one operating device (10) comprises a transducer (12) with a controllable switch (13),
wherein the semiconductor integrated circuit (14) is designed to clock the controllable switch (13) in the emergency lighting event to generate the LED current when the emergency lighting function is so configured that the at least one operating device (10) controls the LED current during the emergency lighting event.

9. Lighting system (1) according to any one of the preceding claims,
wherein the lighting system comprises a plurality of operating devices (10), and
wherein an emergency lighting function is configured only in some of the operating devices (22, 24) connected to the DC bus in such a way that the corresponding operating devices (22, 24) generate the LED current during the emergency lighting event.

10. Lighting system (1) according to one of the preceding claims, wherein the DC voltage source comprises a battery or an accumulator (5).

11. Luminaire, comprising an operating device (10) of a lighting system (1) according to one of the preceding claims, and at least one light-emitting diode (9) which is connected to an output of the operating device (10).

12. Method for emergency lighting operation in a lighting system (1) with a DC bus (6), at least one operating device (10) having an input (11) for coupling to a DC bus (6) to receive a DC supply voltage,
wherein the at least one operating device (10) is connected to the DC bus (6), and wherein the at least one operating device (10) has a configurable emergency lighting function, a DC voltage source (5) for providing the supply voltage to the DC bus (6) during emergency lighting in the event of failure of an AC voltage source of the lighting system, and a central unit (3) comprising a supply circuit (4) with an AC/DC converter to provide the DC supply voltage to the DC bus (6) during a normal mode when the AC voltage source is available,
wherein the method comprises:
- detecting the emergency lighting by the at least one operating device (10), and
- providing an LED current through the at least one operating device (10) to at least one light emitting diode (9) during emergency lighting as a function of how the emergency lighting function of the at least one operating device (10) is configured, wherein the at least one operating device (10) is supplied with the DC supply voltage via the DC bus (6) during emergency lighting.

13. Method according to claim 12, wherein the method with the lighting system (1) according to one of claims 1 to 10 is implemented.

## Revendications

1. Système d'éclairage (1) comprenant :
un bus DC (6),
au moins un appareil de commande (10) pour au moins une diode électroluminescente (9),
l'au moins un appareil de commande (10) comprenant une entrée (11) pour un couplage avec le bus DC (6) pour la réception d'une tension d'alimentation DC, par l'intermédiaire duquel l'au moins un appareil de commande (10) peut être alimenté en énergie aussi bien en fonctionnement normal lorsqu'une source de tension AC du système d'éclairage (1) est disponible que dans un cas d'éclairage de secours lors d'une panne de la source de tension AC par l'intermédiaire du bus DC (6),
l'au moins un appareil de commande (10) étant relié avec le bus DC (6),
l'au moins un appareil de commande (10) comprenant une fonction d'éclairage de secours configurable et
l'au moins un appareil de commande (10) étant conçu pour générer, dans le cas d'éclairage de secours, le courant de LED pour l'au moins une diode électroluminescente (9) en fonction de la manière dont la fonction d'éclairage de secours est configurée,
une source de tension DC (5) pour la mise à disposition de la tension d'alimentation au niveau du bus DC (6) dans le cas d'éclairage de secours et
une unité centrale (3) qui comprend un circuit d'alimentation (4) avec un convertisseur AC/DC pour la mise à disposition de la tension d'alimentation DC au niveau du bus DC (6) en fonctionnement normal.

2. Système d'éclairage (1) selon la revendication 1,
moyennant quoi il peut être déterminé, par l'intermédiaire de la fonction d'éclairage de secours, si l'au un appareil de commande (10) génère le courant de LED dans le cas de l'éclairage de secours.

3. Système d'éclairage (1) selon la revendication 1 ou la revendication 2,
la fonction d'éclairage de secours pouvant être configurée par l'intermédiaire d'au moins un élément de circuit (15) de l'au moins un appareil de commande (10).

4. Système d'éclairage (1) selon la revendication 3,
l'au moins un élément de circuit étant sélectionné dans un groupe constitué d'un pontet (16), d'une résistance réglable et d'un condensateur réglable.

5. Système d'éclairage (1) selon l'une des revendications précédentes,
l'au moins un appareil de commande (10) comprenant une interface (11 ; 18) pour la réception d'une instruction pour la configuration de la fonction d'éclairage de secours.

6. Système d'éclairage (1) selon l'une des revendications précédentes, l'au moins un appareil de commande (10) comprenant un circuit semi-conducteur intégré (14) qui est conçu pour détecter le cas d'éclairage de secours et pour contrôler l'au moins un appareil de commande (10) dans le cas de l'éclairage de secours en fonction de la manière dont la fonction d'éclairage de secours est configurée.

7. Système d'éclairage (1) selon la revendication 6,
le circuit semi-conducteur intégré (14) étant relié avec l'entrée et étant conçu pour détecteur le cas de l'éclairage de secours par la surveillance d'une tension au niveau de l'entrée (11).

8. Système d'éclairage (1) selon l'une des revendications 6 à 7, l'au moins un appareil de commande (10) comprenant un convertisseur (12) avec un commutateur contrôlable (13),
le circuit semi-conducteur intégré (14) étant conçu pour commuter de manière cadencée le commutateur contrôlable (13) dans le cas d'éclairage de secours, pour générer le courant de LED lorsque la fonction d'éclairage de secours est configurée de façon à ce que l'au moins un appareil de commande (10) mette à disposition le courant de LED dans le cas de l'éclairage de secours.

9. Système d'éclairage (1) selon l'une des revendications précédentes,
le système d'éclairage comprenant plusieurs appareils de commande (10) et moyennant quoi, dans seulement une partie des appareils de commande (22, 24) reliés avec le bus DC, une fonction d'éclairage de secours est configurée de façon à ce que les appareils de commande (22, 24) correspondants génèrent le courant de LED dans le cas de l'éclairage de secours.

10. Système d'éclairage (1) selon l'une des revendications précédentes,
la source de tension DC comprenant une batterie ou un accumulateur (5).

11. Luminaire comprenant
un appareil de commande (10) d'un système d'éclairage (1) selon l'une des revendications précédentes et
au moins une diode électroluminescente (9) qui est reliée avec une sortie de l'appareil de commande (10).

12. Procédé pour un fonctionnement d'éclairage de secours dans un système d'éclairage (1) avec un bus DC (6), au moins un appareil de commande (10), qui qui comprend une entrée (11) pour un couplage avec un bus DC (6) pour la réception d'une tension d'alimentation DC, l'au moins un appareil de commande (10) étant relié avec le bus DC (6) et l'au moins un appareil de commande (10) comprenant une fonction d'éclairage de secours configurable,
une source de tension DC (5) pour la mise à disposition de la tension d'alimentation au niveau du bus DC (6) dans un cas d'éclairage de secours lors d'une panne d'une source de tension AC du système d'éclairage et
une unité centrale (3), qui comprend un circuit d'alimentation (4) avec un convertisseur AC/DC pour la mise à disposition de la tension d'alimentation DC au niveau du bus DC (6) en fonctionnement normal,
ce procédé comprenant :
la détection du cas d'éclairage de secours par l'au moins un appareil de commande (10) et
la mise à disposition d'un courant de LED par l'au moins un appareil de commande (10) au niveau d'au moins une diode électroluminescente (9) dans le cas de l'éclairage de secours en fonction de la manière dont la fonction d'éclairage de secours de l'au moins un appareil de commande (10) est configurée, l'au moins un appareil de commande (10) étant alimenté dans le cas d'éclairage de secours par l'intermédiaire du bus DC (6) avec la tension d'alimentation DC.

13. Procédé selon la revendication 12,
le procédé étant exécuté avec le système d'éclairage (1) selon l'une des revendications 1 à 10.
